# EUROPÄISCHE PATENTANMELDUNG

(11) **EP 0 635 284 A2**
(43) Veröffentlichungstag der Anmeldung: **25.01.1995**
(21) Anmeldenummer: 94250176.8
(22) Anmeldetag: 06.07.1994
(51) Int. Cl.: A63B 9/00, F16G 11/12

(54) **Spielgerät**

(30) Priorität: 06.07.1993 DE 4323323; 11.05.1994 DE 4416800
(71) Anmelder: SMB SEIL-SPIELGERÄTE GmbH BERLIN, D-13587 Berlin (DE)
(72) Erfinder: Patzer, Siegfried, Dipl.-Ing., D-10713 Berlin (DE)
(74) Vertreter: Christiansen, Henning, Dipl.-Ing.

(57) **Zusammenfassung**

Spielgerät, insbesondere Seilnetzpyramide, mit einem im wesentlichen senkrechten Mast und mehreren Abspannseilen, wobei der Mast mittels der sich von seiner Spitze zum Aufstellboden erstreckenden und untereinander Querverbindungen aufweisenden Seile dadurch in seiner Lage gehalten wird, daß die freien Enden der Seile jeweils mit einem im Boden befindlichen Zuganker verbunden sind, wobei im Verlauf von mindestens einem der zur Abspannung des Mastes dienenden Seile (3, 3') oder einem Befestigungspunkt für mehrere Seile mindestens ein verstellbares elastisches Element (5, 5.1, 5.2) vorgesehen ist, wobei die Dehnbarkeit des elastischen Elements (5, 5.1, 5.2) derart ausgebildet ist, daß es nach entsprechender Einstellung einer erhöhten Vorspannung zu einem ersten Zeitpunkt, insbesondere bei Aufstellung des Spielgeräts, die axiale Anfangsdehnung des jeweiligen Abspannseils durch eine entsprechende axiale Verkürzung aufnimmt und das elastische Element auch nach im wesentlichen abgeschlossener Anfangsdehnung unter einer Vorspannung steht, welche einer einzuhaltenden Sollvorspannung entspricht.

## Beschreibung

Die Erfindung betrifft ein Spielgerät der im Oberbegriff des Anspruchs 1 angegebenen Art.

Von Spielgeräten, die im Freien auf Sportplätzen und/oder in Freizeitanlagen aufgestellt werden, erfreuen sich solche immer größerer Beliebtheit, die Seilelemente der verschiedensten Abmessungen aufweisen. Die konstruktive Einbindung von Seilelementen ermöglicht die Gestaltung von Spielgeräten mit hohem Spiel- und Erlebniswert, da Seile mit geeignet gewähltem Durchmesser einerseits eine ausreichende Kraftübertragung gewährleisten und andererseits durch ihre Griffigkeit und Flexibilität die Schaffung von Geräten mit einer Spieldynamik gestatten, welche den Spiel- und Bewegungsbedürfnises von Kindern aller Altersklassen in idealer Weise entgegenkommt.

Zum Klettern, Schwingen und Schaukeln sind dabei sogenannte Seilnetzpyramiden besonders gut geeignet. Diese bestehen aus einem zentrisch angeordneten und im wesentlichen senkrecht stehenden Mast, der durch eine Anzahl von Seilen, die an der Mastspitze befestigt und im Boden verankert sind, in seiner Position gehalten wird. Die für die Seilnetzpyramiden geeigneten Stahllitzenseile mit (Chemie-) Faserummantelung weisen neben ihren Vorteilen (Griffigkeit, Abriebfestigkeit, Witterungsbeständigkeit u.ä.) jedoch materialbedingt einen erheblichen Nachteil auf. Dieser besteht im wesentlichen darin, daß sich die Seile bei Belastung (Benutzung der Seilpyramide) nach der Installation über einen Zeitraum von mehreren Monaten irreversibel dehnen (recken). Durch diesen unerwünschten Längenzuwachs der anfangs hart verspannten Seile wird die gesamte Seilpyramide schlaff und hinsichtlich ihres Spielwertes unattraktiv. Ein jeweiliges Nachstellen ist wegen der damit meist verbundenen Anfahrt zeit- und kostenaufwendig.

Ausgehend von den Mängeln des Standes der Technik liegt der Erfindung die Aufgabe zugrunde, bei einem Spielgerät der eingangs genannten Gattung eine konstruktive Veränderung der Seilverspannung anzugeben, durch welche die erforderliche Vorspannung der Seile bzw. des Seilnetzes auch nach längerer Benutzungsdauer ohne Nachspannen im wesentlichen erhalten bleibt.

Diese Aufgabe wird mit den kennzeichnenden Merkmalen des Anspruchs 1 gelöst.

Die Erfindung schließt die Lehre ein, daß die, insbesondere Anfangs-, Längendehnung von Seilen in vorteilhafter Weise kompensiert werden kann, wenn zwischen Seil und Einspannpunkt ein elastisches Bauteil vorgesehen ist, das anfangs mit einer großen Kraft derart mechanisch vorgespannt wird, daß durch die irreversible Seillängung die zusätzlich Vorspannung allmählich kompensiert und sich der für die gewünschte elastische Verspannung des Seile gewünschte Arbeitspunkt des elastischen Bauteils nach Abschluß der Seillängung einstellt. Hierbei ist auch die Erkenntnis maßgeblich, daß die Seilreckung nach einer Anfangsphase von einigen Monaten abgeschlossen ist.

Entsprechend einer bevorzugten Ausführungsform der Erfindung ist das zwischen Seilende und Einspannpunkt befindliche Bauteil als Federabspannung ausgebildet. Als Federelement der Federabspannung ist eine gerade Schraubenfeder vorgesehen, die - als Druckfeder ausgebildet und zwischen zwei Widerlagern derart vorspannbar angeordnet ist - daß sie die Funktion einer Zugfeder übernimmt, um die bei Benutzung des Spielgerätes mit der Zeit entstehende Seillängung (Reckung) auszugleichen.

Um die für die Dehnungskompensation erforderliche Vorspannung der Schraubenfeder an die verschiedensten Seilarten anpassen zu können, weist die Federabspannung in vorteilhafter Weise ein mechanisch verstellbares Spannschloß auf, durch welches die Vorspannung der Schraubenfeder in einem vorgebenen Bereich einstellbar ist. Konstruktiv besonders günstig ist dafür eine Gewindebolzen/Mutter-Kombination, bei der sich die Kontermutter beim Herstellen der Vorspannung auf einem der Widerlager abstützt, durch welches der Gewindebolzen gesteckt ist.

Die Überlagerung der Kennlinie der verwendeten Schraubenfeder (Kraft/Weg-Diagramm) und der Kennlinie der Elastizität der zu spannenden Seile bewirkt in Überlagerung mit ihrer Dehnung in günstiger Weise, daß sich resultierend eine abgeknickte Kennlinie für die gesamte Anordnung der Federabspannung ergibt. Beim Vorspannen der ungelängten Seile wird die als Druckfeder belastete Schraubenfeder mittels des Spannschlosses bis nahe zur Blockbildung zusammengepreßt. Im sich ergebenden Arbeitsdiagramm der sich überlagernden Kennlinien der Seil- und Federelastizitäten wird eine Vorspannung eingestellt, welche größer ist als diejenige, welche im Endzustand angestrebt wird.

Die Elastizität der Seilnetzpyramide wird in diesem Anfangsstadium der Benutzung überwiegend durch die Elastizität der einzelnen Seile gewährleistet. Über den Anfangszeitraum der Seilreckung wird die resultierende Verälängerung der Seile durch die eingefügten elastischen Glieder aufgenommen, die derart dimensioniert sind, daß diese Längung insgesamt durch Verkürzung dieser Glieder aufgenommen wird, wobei sich die Schraubenfedern dehnen. Damit verringert sich die Vorspannung des betreffenden Seiles. Die Anordnung ist jedoch so dimensioniert, daß bei vollendeter Anfangsdehung der Seile die Vorspannnung dem beabsichtigten diesbezüglichen Betriebswert entspricht. Ist somit die Seillängung nach einem längeren Benutzungszeitraum abgeschlossen, so steht bei in axialer Richtung im wesentlichen nur geringfügig elastischen Seilen jedem Seilstrang in günstiger Weise der durch die Federentspannung freigewordene Federweg der Schraubenfeder bis zur Blockbildung als Elastizitätsreserve bei der bestimmungsgemäßen Benutzung der Seilnetzpyramide zur Verfügung.

Entsprechend einer anderen günstigen Weiterbildung der Erfindung ist die Federabspannung der einzelnen Seile der Seilnetzpyramide im (lockeren) Boden angeordnet. Dadurch wird auf einfache und zugleich vorteilhafte Weise erreicht, daß es auch bei intensivster Benutzung der Seilpyramide nicht zu Schwingungsresonanzen kommt. Das zwischen den Windungen der Schraubenfeder befindliche Bodenmaterial des Aufstellungsorts (das aus Sicherheitsgründen meist aus lose aufgeschüttetem Sand oder einer sonstigen Falldämpfenden Schüttung besteht) bewirkt, daß sich die Längung der Feder gegen einen geringeren Widerstand ausführen läßt als eine Windungsbewegung in Richtung der Blockbildung, da im letztgenannten Fall zwischen die Federwindungen geratende Teilchen die Blockbildung sperren können. In gleicher Weise wirkt die relativ geringe Masse des Mastes, vorzugsweise ein aus faserverstärktem Kunststoff hergestellter Hohlmast, und die Dämpfungswirkung des Seilnetzes einer ungewünschten Schwingneigung entgegen.

Nach einer weiteren Ausführungsform der Erfindung ist die vorstehend beschriebene Federabspannung mit einem zweiteiligen Gehäuse versehen und oberhalb des Bodenmaterials im Bereich der Befestigungspunkte der Seilpyramide am Boden angeordnet. Das die Federabspannung verkleidende Gehäuse besteht im wesentlichen aus zwei becherförmig ausgebildeten und mit ihren Öffnungsbereichen ineienandergreifenden Kappen.

Die erfindungsgemäße Vorrichtung kann sowohl für einzelne als auch jeweils für mehrere Seile gemeinsam vorgesehen sein. Eine wirksame, auf alle im wesentlichen vertikal ausgerichteten Seilelemente der Seilpyramide gleichzeitig wirkende Nachspannmöglichkeit in Form einer Federabspannung ist entsprechend einer anderen günstigen Weiterbildung der Erfindung im Bereich des Mastverlaufs, insbesondere im Bereich der Mastspitze, der Seilpyramide vorgesehen. Unterhalb des Mastendes ist dabei ein Widerlager vorgesehen und dem sich ein vorgespanntes Federelement abstützt. Das Federelement ist vorzugsweise als Schraubenfeder ausgebildet und wird von einer zylindrischen, auf die Mastspitze geschobenen Hülse, welche auch das Widerlager einschließt, umhüllt. Die Hülse weist an ihrem dem Widerlager abgewandten Ende eine Mehrzahl von Anschlagpunkten zum Befestigen der einzelenen Seilenden auf, so daß bei Benutzung der Seilpyramide die Schraubenfeder einer Druckbelastung unterworfen ist. Bei einer möglichen Seillängung wird der Längenzuwachs durch Strecken der vorgespannten Schraubenfeder ausgeglichen.

Für den Ausgleich einer möglichen Seillängung von im beliebig ausgerichteten Seilen, welche mit sich im wesentlichen quer dazu erstreckenden Seilen der Seilpyramide in geeigneter Weise verbunden sind, ist es nach einer weiteren Ausführungsform der Erfindung von Vorteil, die Federabspannung direkt in dem Kreuzungs- oder Berührungspunkt der einzelnen Seile zu positionieren. Auch hier wird durch eine Federabspannung die Seillängung mehrerer Seilelemente gleichzeitig kompensiert. Die Federabspannung weist einen im wesentlichen zylindrisch ausgebildeten Hohlkörper auf, in dem ein zylindrischer, gegen die Kraft einer innerhalb des Hohlkörpers befindlichen Feder axial verschieblicher und mit einem Ende aus dem Hohlkörper herausragender, bolzenartiger Stößel vorgesehen ist. Der Hohlkörper weist an seinem geschlossenen Ende und der Stößel an seinem aus dem Hohlkörper herausragenden Ende eine nutenförmige Ausnehmung auf. Diese dienen jeweils der Seilführung, wenn die Federabspannung in dem Kreuzungspunkt der Seile eingesetzt ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine bevorzugte Ausführungsform der Erfindung, in schematisierter Darstellung,
- Figur 2: eine vorteilhafte Weiterbildung der in Figur 1 gezeigten Erfindung in schematisierter Darstellung,
- Figur 3: die schematisierte Darstellung eines Details der in Figur 2 gezeigten Erfindung,
- Figur 4: eine Kennlinie, die die Wirkungsweise der in Figur 2 dargestellten Weiterbildung der Erfindung charakterisiert,
- Figur 5: eine weitere vorteilhafte Ausführungsform der Erfindung in schematisierter Schnittdarstellung,
- Figur 6: eine andere günstige Weiterbildung der Erfindung in schematischer Darstellung der Ansicht eines Teilschnittes sowie
- Figur 7: eine zusätzliche Ausführungsform der Erfindung als Teilschnitt in schematischer Darstellung.

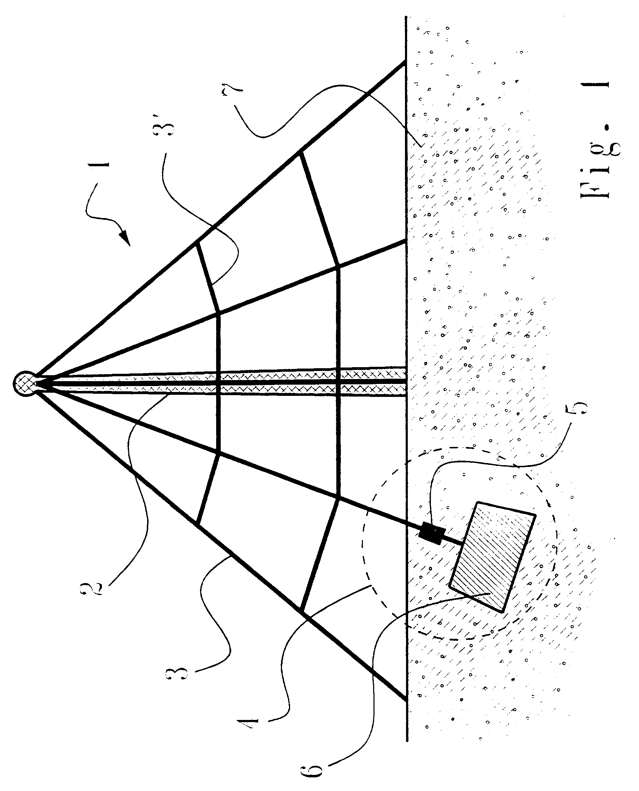

In Figur 1 ist eine Seilnetzpyramide 1 mit achteckiger Grundfläche als Teilschnitt in Seitenansicht in schematisierter Form dargestellt. Im Zentrum der Pyramide befindet sich ein Mast 2, der vorzugsweise einen hohlen Schaft aufweist. An der Spitze des Mastes 2 sind die einzelnen kunstfaserummantelten Stahl-Seile 3 angeschlagen und von dort zu einem im Boden 7 befindlichen Zuganker 6 geführt.

Die Einspannstelle 4 weist zusätzlich zu dem vorzugsweise als Betonteil ausgebildeten Anker 6 eine Federabspannung 5 auf. Diese Vorrichtung dient dem automatischen Längenausgleich des jeweiligen Seiles 3 und sorgt auf einfache und zugleich vorteilhafte Weise dafür, daß die Seile 3 der Seilpyramide auch nach mehreren Jahren der Benutzung straff gespannt sind und damit für die Benutzer den gewünschten Spielwert aufweisen. Die Seillängung beträgt im ersten Jahr etwa 5 cm je 10 m Seillänge und erreicht in den darauffolgenden Monaten Werte von etwa 3 cm bzw. 2 cm pro Monat. Sie wird durch die Federabspanung im wesentlichen vollständig kompensiert. Zwecks Erhöhung der Stabilität der gesamten Anordnung und Verbesserung der "Einstiegmöglichkeiten" in die Seilpyramide sind die einzelnen Seile 3 durch sich quer von Seil zu Seil erstreckende Seilabschnitte 3' verbunden.

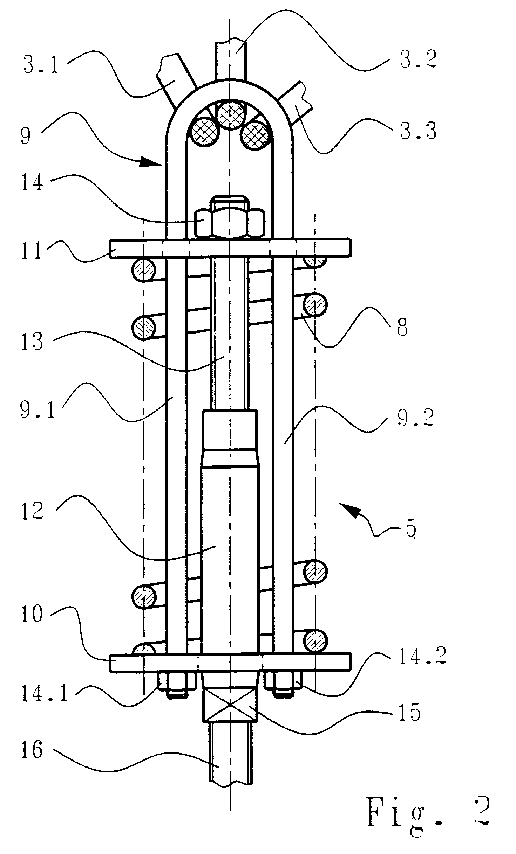

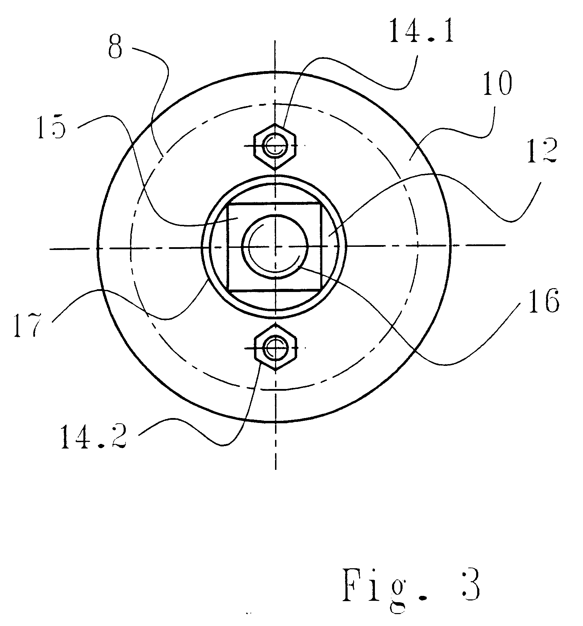

Die Figuren 2 und 3 zeigen die Federabspannung 5 im Detail als schematisierte Seitenansicht bzw. als schematisierte Darstellung der Federabspannung gemäß Figur 2 in Ansicht von unten. Wesentliches Element der Federabspannung 5 ist eine Schraubenfeder 8, welche durch Zusammenpressen mittels eines Spannschlosses 12 eine vorbestimmte, dem jeweilgen Seilmaterial angepaßte, einstellbare Vorspannung erhält. Dazu ist die Schraubenfeder 8 zwischen zwei Widerlagern 10 und 11 angeordnet. Das Spannschloß 12 erstreckt sich im wesentlichen auf gleicher Achse innerhalb des Windungsbereichs der Schraubenfeder 8 und durchdringt dabei - ausgehend vom im Boden befindlichen Zuganker (vergleiche Position 6 in Figur 1) in Richtung der zu verspannenden und aus drei Seilelementen 3.1, 3.2, 3.3 bestehenden Seile - das erste Widerlager 10 und ist mit dem zweiten Widerlager 11 verbunden. Ein Schraubbolzen 13, der zusammen mit dem fest verankerten Bolzen 16 mit dem Spannschloß in Wechselwirkung steht, stützt sich über eine Mutter 14 an dem als Platte ausgestalteten Widerlager 11 ab. Die Mutter ist dabei bevorzugt mit dem plattenförmigen Widerlager 11 verschweißt.

Eine U-förmige Seilöse 9 durchdringt mit ihren Schenkeln 9.1 und 9.2 die beiden Widerlager 10 und 11 aus Richtung der zu verspannenden Seile. Die Schenkel der Seilöse 9 sind ebenfalls - beidseitig des Spannschlosses 12 - innerhalb der Schraubenfeder 8 angeordnet. An den freien Enden der Schenkel 9.1 und 9.2 ist jeweils eine Sicherungsmutter 14.1 und 14.2 vorgesehen, die ein axiales Verschieben der Seilöse 9 in Richtung der zu spannenden Seile 3.1, 3.2, 3.3 sperrt. Das den zu spannenden Seilen zugewandte Widerlager 11 stützt sich auf dem entsprechenden Windungsende der Schraubenfeder 8 ab und wird durch die Schenkel 9.1 und 9.2 der Seilöse 9 geführt. Dadurch ist es in vorteilhafter Weise möglich, die jetzt als Druckfeder wirkende Schraubenfeder 8 durch Anziehen des Spannschlosses 12 zusammenzupressen, wobei das Widerlager 11 in Richtung auf das andere Widerlager 10 bewegt wird. Das in der Bohrung 17 geführte Spannschloß 12 weist dazu an seinem aus der Schraubenfeder 8 herausragenden Ende 16 einen vierkantförmigen Ansatz 15 zur Drehmomentübertragung auf, wodurch das Spannschloß 12 auf einfache Weise mittels eines Hilfswerkzeugs zwecks Einstellen der erforderlichen Federvorspannung angezogen (oder gelockert) werden kann, während die Mutter 13 (durch Verschweißen) arretiert bzw. als fester Bolzenkopf ausgebildet ist.

Mit der dargestellten ein elastisches Element bildenden Federanordnung wird also der Kraftangriffspunkt durch entsprechende mechanische Verbidungsmittel bezogen auf jedes Ende der Schraubenfeder jeweils auf das gegenüberliegende Ende weitergeleitet, so daß bei Zugbelastung die Schraubenfeder nicht expandiert, sondern komprimiert, wird und somit als Druckfeder wirkt.

Durch Anziehen der Spannmutter 14 wird die Vorspannung des jeweiligen Seils bei der Installation auf etwa 25 kN eingestellt. Bei einem derart vorgespannten Seil befindet sich die Schraubenfeder 8 kurz vor einer Blockbildung. Für den Federungseffekt der Seilpyramide wird in diesem Zustand im wesentlichen die Elastizität des einzelnen Seils ausgenutzt, da die Schraubenfeder 8 nur eine im wesentlichen starre Verlängerung des Seils bildet. Setzt im Laufe der Benutzung der Seilpyramide die materialbedingte Seillängung ein, wirkt die Schraubenfeder 8 als Zugfeder und kompensiert den Längenzuwachs des entsprechenden Seils durch die eigene Ausdehnung unter Verringerung der für das betreffende Seil wirksamen Vorspannung. Die Vorspannung des Seils nimmt damit zunehmender Seillängung ab. Die Anordnung wird dabei so eingestellt, daß beim erreichten Endwert der Seildehnung eine Vorspannung verbleibt, welche für die Stabilität des Raumnetzes ausreichend ist. Durch die Dehnung der Schraubenfeder 8 steht jedoch für die erforderliche Federwirkung der Seilpyramide in zunehmenden Maße der Federweg bis zur Blockbildung zur Verfügung.

Da die Seillängung bei Benutzung der Seilpyramide auch eine Neigung des Mastes (vergleiche Position 2 in Figur 1) zuläßt, ist dessen Ausbildung als Hohlmast mit relativ geringer Masse günstig, da dies im Zusammenhang mit der Dämpfungswirkung des gesamten Seilnetzes jede resonanzartige Erhöhung einer Mastbewegung unterbindet. Damit ist wegen der trampolinartigen elastischen Vorspannung des Seilnetzes im endgültigen Gebrauchzustand ein zusätzlicher Spieleffekt gegeben. Gleichermaßen vorteilhaft ist auch die Anordnung der Federabspannung, zumindest teilsweise, im Erdreich am Aufstellungsort der Seilpyramide. Die die Schraubenfedern 8 umgebende relativ feinkörnigen Bodenbestandteile bewirken, daß eine Federlängung durch Zugbelastung der Seile leichter vonstatten geht als eine Federverkürzung bei Seilentlastung. Die losen, zwischen den einzelnen Windungen befindlichen Bodenbestandteile sind nur zeitverzögert und durch besondere Maßnahmen (z.B. gezielt Erschütterungen) zu beseitigen.

Das Seilnetz der Pyramide ist somit auf einfache und zugleich vorteilhafte Weise selbstspannend und läßt sich auch auf unebenen (teilweise auch geneigtem) Untergrund aufstellen und - bedingt durch die stets straffen, hart verspannten Seile - auch mit einem hohen Spielwert benutzen.

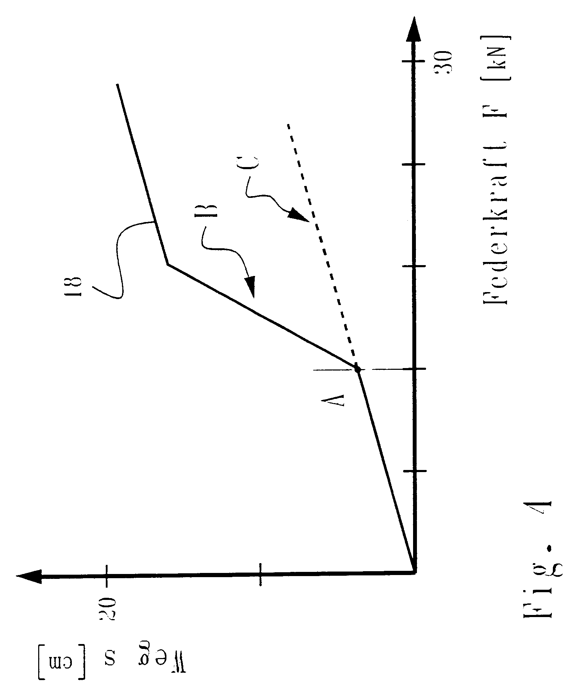

Der Aufbau und die Wirkungsweise der erfindungsgemäßen Seilabspannung führt zu einer geknickten Gesamtkennlinie des Abspannungssystems. Diese Kennlinie ist in Figur 4 als Weg/Kraft-Diagramm 18 in schematisierter Darstellung gezeigt. Der durch den Koordinatenursprungspunkt verlaufende Teil der Kennlinie 18 ist über den Arbeitspunkt A hinausgehend gestrichelt (Kurvenabschnitt C) verlängert. Dieser Kurvenverlauf entspricht der normalen Federkennlinie des Seils ohne zusätzliches elastisches Element.

Die Vorspannung der Schraubenfeder der Federabspannung durch eine vom Seilmaterial größenmäßig abhängige Vorspannkraft F von etwa 25 kN wird im Diagramm ersichtlich durch eine Verschiebung des Abschnitts C im Diagramm nach oben. In der Übergangsphase, in der die Seillängung schrittweise durch die Zugfederfunktion der Schraubenfeder kompensiert wird, ist der Abschnitt B der Kennlinie 18 maßgebend. Nach Ende der Seillängung stellt sich ein Arbeitspunkt A mit einer permanenten Vorspannkraft F im Bereich von 5 bis 15 kN ein und für die Schraubenfeder gilt die normale Federkennlinie. Mit den erfinderischen Maßnahmen wird also erreicht, daß nicht nur die Seilreckung in der Anfangsphase nach dem Neuaufbau des Seils aufgenommen wird, so daß ein Nachspannen entfällt, sondern aufgrund des sich im Endzustand einstellenden Elastizitätszuwachses der Randseile sich ein höherer Spielwert einstellt, der durch deren "Sprungfederwirkung" bedingt ist.

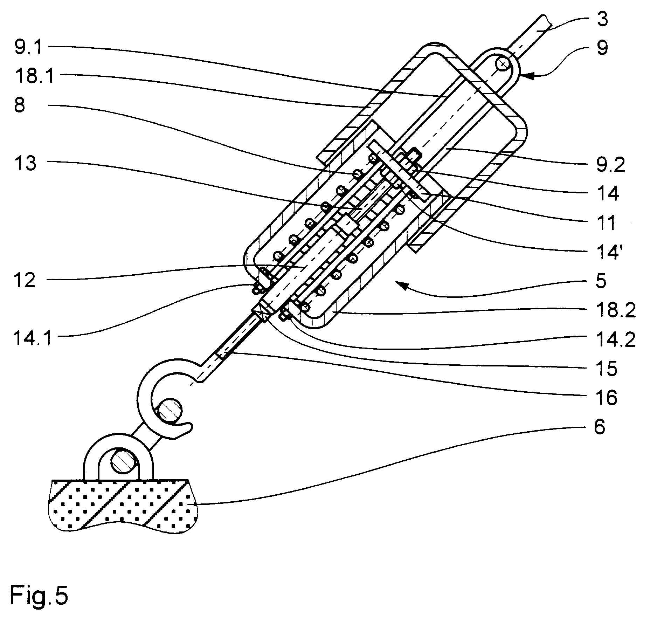

Die in Figur 5 in schematische Schnittansicht gezeigte Federabspannung 5 weist ein aus zwei Teilen 18.1 und 18.2 bestehendes Gehäuse auf. Die Gehäuseteile 18.1, 18.2 sind napfartig ausgebildet, weisen geringfügig unterschiedliche Durchmesser auf und sind teleskopartig verschiebbar. Da als Mittel zum Vorspannen wegen des Gehäuses nur der Vierkant 15 des Spannschlosses 12 zugänglich ist, wird das seilseitige Widerlager 11 durch eine zusätzliche Kontermutter 14' fest mit dem gewindetragenden Schaft 13 verbunden. Bei Verstellen des Spannschlosses 12 kann das Widerlager 11 gegen die als Widerlager dienende Bodenplatte des Gehäuseteils 18.2 bewegt werden, wodurch sich die Vorspannung der Feder 8 erhöht.

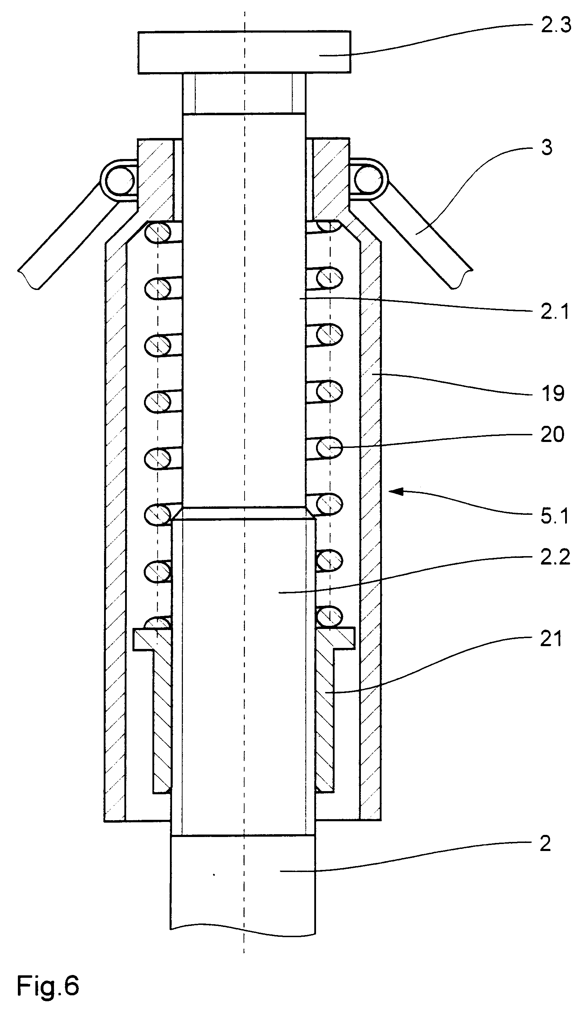

In Figur 6 ist als schematisierte Ansicht eines Teilschnittes eine an der Spitze des Pyramiden-Mastes 2 vorgesehene Federabspannung 5.1 dargestellt. Das Mastende 2.1 weist einen gewindetragenden Abschnitt 2.2 auf, welcher ein aufgeschraubtes - und damit axial verstellbares - Widerlager 21 trägt. Eine sich auf dem Widerlager 21 abstützende Schraubenfeder 20 ist zusammen mit diesem von einer zylindrischen Hülse 19 umgeben, welche ihrerseits auf dem dem Widerlager 21 gegenüberliegende Schraubenende aufliegt und von dem Ende 2.1 des Mastes 2 durchdrungen wird. Die Seile 3 des Seilpyramide greifen an dem oberen Ende des Gehäuses 19 an, wodurch eine mögliche Seillängung durch Wirken der vorgespannten Feder 20 in günstiger Weise ausgeglichen werden kann. Die Vorspannung der Feder 20 wird bei Bedarf durch Verschrauben des Widerlagers 21 in Richtung des freien Endes 2.1 des Mastes 2 erhöht. Eine in das Mastende 2.1 schraubbare Abdeckkappe 2.3 dient als axiale Sicherung des Gehäuses 19. Bei einer anderen - in den Figuren nicht dargestellten - Ausführung kann das Federelement auch in den Mastfuß integriert sein. In diesem Fall würde bei fortgelassenen Seilen 3 und Abdeckkappe 2.3 die Anordnung kopfstehend vorzunehmen sein, wobei dann die über das Ende des Mastes fortgesetzte Hülse 19 den Standfuß bilden würde.

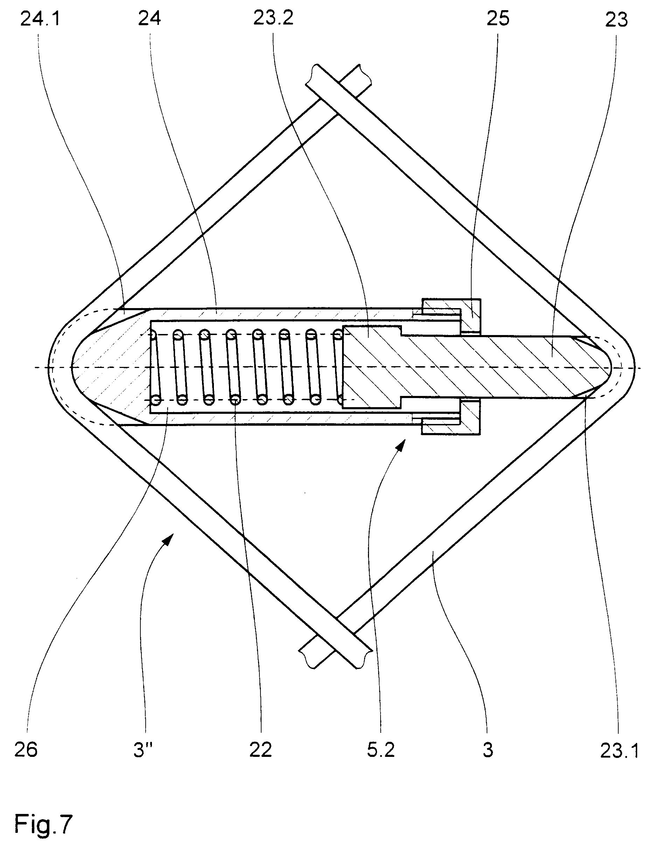

In Figur 7 ist eine in einer Seilkreuzung 3'' angeordnete Federabspannung 5.2 in schematisierter Schnittansicht dargestellt. Die Federabspannung 5.2 ist als stoßdämpferartiges Spreizelement ausgebildet. Sie weist ein napfförmiges Gehäuse 24 auf, in dessen Innenraum 26 ein Federelement 22 vorgesehen ist. Ein zylindrischer Stößel 23 ist gegen die Kraft dieses gekapselten Federelements axial in dem Gehäuse 24 verschieblich angeordnet und ragt teilweise aus dem Gehäuse 24 heraus. Der bolzenartige Zapfen 23 ist durch einen Ringbund 23.2 und eine Überwurfmutter 25 gegen Herausfallen gesichert. Sowohl das Gehäuse 24 als auch der Stößel 23 weisen jeweils an einem Ende eine nutenförmige Ausnehmung 23.1, 24.1 auf, welche einer sicheren Führung der Seile 3 dienen. Die Vorspannung des Federelements 22 ist nicht einstellbar. Kann die Seillängung nicht mehr ausgeglichen werden, ist ein neues Spreizelement mit einem längeren Zapfen 23 einzusetzen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Spielgerät, insbesondere Seilnetzpyramide, mit einem im wesentlichen senkrechten Mast und mehreren mittels im Boden angeordneter Zuganker befestigten mit dem Mast verbundenen Abspannseilen,
**dadurch gekennzeichnet,**
daß im Verlauf mindestens eines der zur Abspannung des Mastes dienenden Seile (3, 3') und/oder einem Befestigungspunkt für mehrere Seile mindestens ein verstellbares elastisches Element (5, 5.1, 5.2) vorgesehen ist, wobei die Dehnbarkeit des elastischen Elements (5, 5.1, 5.2) derart ausgebildet ist, daß es nach entsprechender Einstellung einer erhöhten Vorspannung zu einem ersten Zeitpunkt, insbesondere bei Aufstellung des Spielgeräts, die axiale Anfangsdehnung des jeweiligen Abspannseils durch eine entsprechende axiale Verkürzung aufnimmt und das elastische Element auch nach im wesentlichen abgeschlossener Anfangsdehnung unter einer Vorspannung steht, welche einer einzuhaltenden Sollvorspannung entspricht.

2. Spielgerät nach Anspruch 1, **dadurch gekennzeichnet,** daß das elastische Element (5, 5.1 bzw. 5.2) vorgesehen ist:
zwischen mindestens einem bodenseitigen Seilende (3, 3.1, 3.2, 3.3) und einem im Boden (7) befestigten Zuganker (6),
gemeinsam für mehrere der Abspannung dienenden Seile im Verlauf des Mastes, insbesondere im Bereich der Mastspitze (2.1) oder des Mastfußes, und/oder
an mindestens einem Kreuzungs- oder Knotenpunkt (3'') mehrerer Seile (3, 3').

3. Spielgerät nach nach einem der vorangehenden Ansprüche**, dadurch gekennzeichnet,** daß das elastische Element (5) eine Schraubenfeder (8) aufweist, die zur Einstellung einer erhöhten Vorspannung als Druckfeder vorspannbar ist und zur Kompensation der Seillängung durch Übertragung des Zugkraftangriffs zu jeweils am gegenüberliegenden Ende angeordnete Kraftangriffsmittel als Zugfederelement wirkt.

4. Spielgerät nach Anspruch 3, **dadurch gekennzeichnet,** daß zum Vorspannen der Schraubenfeder (8) ein Spannschloß (12) vorgesehen ist.

5. Spielgerät nach Anspruch 4, **dadurch gekennzeichnet,** daß das elastische Element (5) ein erstes und ein zweites Widerlager (10, 11) aufweist, zwischen denen die Schraubenfeder (8) eingespannt ist, wobei das innerhalb der Schraubenfeder (8), insbesondere koaxial, angeordnete Spannschloß (12) mit dem ersten Widerlager (10) fest verbunden ist und das zweite Widerlager in Richtung des zu spannenden Seils (3, 3.1, 3.2, 3.3) längsverschieblich durchdringt.

6. Spielgerät nach Anspruch 3, **dadurch gekennzeichnet,** daß eines der Kraftangriffsmittel durch eine U-förmige Zugöse (9) gebildet wird, die mit dem zweiten Widerlager (11) des elastischen Element (5) verbunden ist, wobei Schenkel (9.1, 9.2) des U-förmigen Elements innerhalb der Schraubenfeder (8) parallel zum Zuganker verlaufen, und das andere Kraftangriffsmittel durch das freie Ende des Spannschlosses gebildet wird.

7. Spielgerät nach Anspruch 6, **dadurch gekennzeichnet,** daß das Spannschloß (12) an seinem aus der Schraubenfeder (5) herausragenden Ende (16), insbesondere als Vierkant ausgebildete, Mittel (15) zur Drehmomentübertragung aufweist.

8. Spielgerät nach einem der vorangehenden Ansprüche, **dadurch gekennzeichnet,** daß das elastische Element (5) zumindest teilweise im Boden versenkbar ausgestaltet ist.

9. Spielgerät nach einem der vorangehenden Ansprüche, **dadurch gekennzeichnet,** daß das elastische Element (5) ein aus zwei, im wesentlichen becherartig ausgebildeten, mit ihren offenen Enden teleskopartig ineinandergreifenden Teilen (18.1, 18.2) bestehendes Gehäuse aufweist.

10. Spielgerät nach Anspruch 2, **dadurch gekennzeichnet,** daß das elastische Element (5.1) ein an einem Mastende (2.1) verschiebbar befestigtes Widerlager (21) aufweist, an dem sich eine - insbesondere von einer zylindrischen Hülse (19) eingeschlossene und oder den Mast mindestens bereichsweise umschließende -Schraubenfeder (20) abstützt, über deren anderes Ende das mindestens eine Seil (3) im Bereich der Mastspitze (2.3) befestigt ist bzw. sich der Mast auf dem Boden abstützt.

11. Spielgerät nach Anspruch 10, **dadurch gekennzeichnet,** daß das Widerlager (21) als Schraubhülse ausgebildet ist, durch deren Verschiebung in Richtung des Mastes (2) die Vorspannung der Schraubenfeder (20) heraufsetzbar ist.

12. Spielgerät nach Anspruch 2, **dadurch gekennzeichnet,** daß das elastische Element (5.2) im Falle der Anbringung in einem Kreuzungs- oder Knotenpunkt mehrerer Seile als im wesentlichen stoßdämpferartiges kompressibles ausgebildet ist, welches durch an seinen Enden vorgesehene, nutenförmige Führungselemente (24.1, 24.2) zwischen den Seilen (3) gehalten wird.
